# EUROPEAN PATENT SPECIFICATION

(11) **EP 4 280 806 B1**
(45) Date of publication and mention of the grant of the patent: **23.09.2026**
(21) Application number: 23202142.8
(22) Date of filing: 12.08.2020
(51) Int. Cl.: H04W 4/06, H04W 72/00, H04W 76/40

(54) **EFFICIENT MULTICAST**
EFFIZIENTES MULTICAST
MULTICAST EFFICACE

(30) Priority: 14.08.2019 EP 19191822
(43) Date of publication of application: 22.11.2023
(62) Document number(s) of the earlier application(s) in accordance with Art. 76 EPC: 20753376.1 / 4 014 519
(73) Proprietor: Fraunhofer-Gesellschaft zur Förderung der angewandten Forschung e.V., 80686 München (DE)
(72) Inventor: Pilz, Jens, 10587 Berlin (DE); Wieruch, Dennis, 10587 Berlin (DE); Haustein, Thomas, 10587 Berlin (DE)
(74) Representative: König, Andreas Rudolf

(56) References cited:
- WO-A1-2018/084785
- US-A1- 2009 154 388
- US-A1- 2010 246 469
- US-A1- 2011 021 224
- US-A1- 2013 301 515

## Description

### BACKGROUND

US2010246469A1 discloses a node or UE in a wireless communication network receiving downlink broadcast or multicast transmissions from a base station over a downlink channel. The node determines channel quality for the downlink channel, generates COI information, and reports it to the base station over a CQI channel, including by using orthogonal channel dimensions corresponding to different COI values.

US2009154388A1 discloses a multi-cast multiple base station wireless system in which subscribers receive MBS signals, determine received signal quality, and report signal quality or an above/below-threshold indicator back to base stations for link adaptation. It also discloses layered modulation, adaptive thresholds, intermittent scheduled uplink reporting, and designated OFDM sub-carriers for feedback transmission.

### Description

The present application relates to the field of wireless communication systems or networks, more specifically to approaches to provide for multicast downlink control information. Embodiments concern improvements in distributing content in a network.

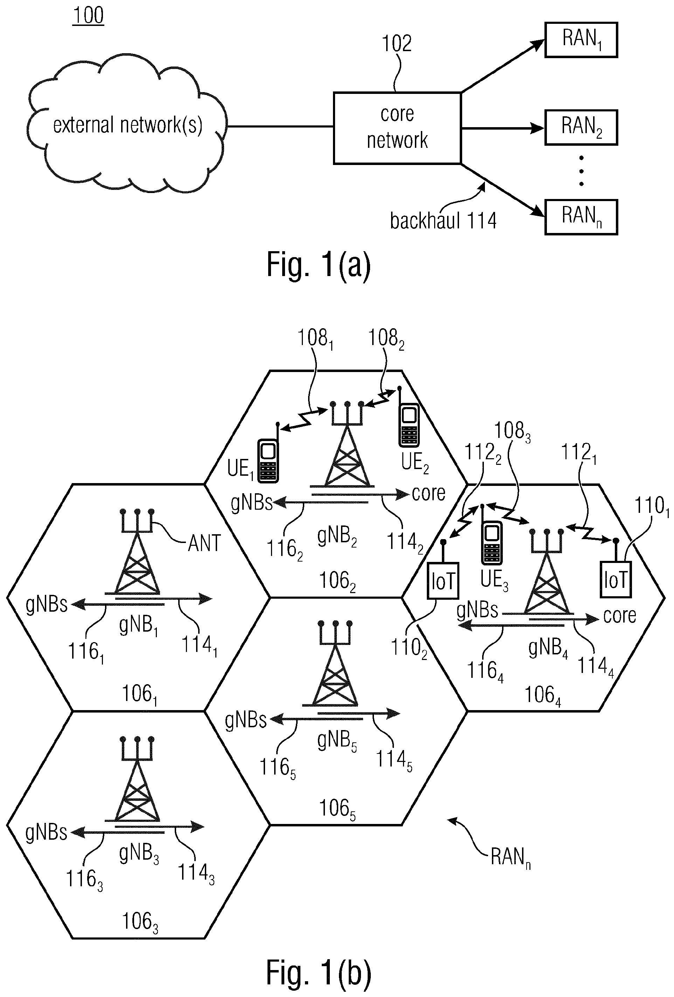

Fig. 1 is a schematic representation of an example of a terrestrial wireless network 100 including, as is shown in Fig. 1(a), a core network 102 and one or more radio access networks RAN₁, RAN₂, ... RAN_{N}. Fig. 1(b) is a schematic representation of an example of a radio access network RANₙ that may include one or more base stations gNB₁ to gNB₅, each serving a specific area surrounding the base station schematically represented by respective cells 106₁ to 106₅. The base stations are provided to serve users within a cell. The term base station, BS, refers to a gNB in 5G networks, an eNB in UMTS/LTE/LTE-A/ LTE-A Pro, or just a BS in other mobile communication standards. A user may be a stationary device or a mobile device. The wireless communication system may also be accessed by mobile or stationary loT devices which connect to a base station or to a user. The mobile devices or the loT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1(b) shows an exemplary view of five cells, however, the RANₙ may include more or less such cells, and RANₙ may also include only one base station. Fig. 1(b) shows two users UE₁ and UE₂, also referred to as user equipment, UE, that are in cell 106₂ and that are served by base station gNB₂. Another user UE₃ is shown in cell 106₄ which is served by base station gNB₄. The arrows 108₁, 108₂ and 108₃ schematically represent uplink/downlink connections for transmitting data from a user UE₁, UE₂ and UE₃ to the base stations gNB₂, gNB₄ or for transmitting data from the base stations gNB₂, gNB₄ to the users UE₁, UE₂, UE₃. Further, Fig. 1(b) shows two loT devices 110₁ and 110₂ in cell 106₄, which may be stationary or mobile devices. The loT device 110₁ accesses the wireless communication system via the base station gNB₄ to receive and transmit data as schematically represented by arrow 112₁. The loT device 110₂ accesses the wireless communication system via the user UE₃ as is schematically represented by arrow 112₂. The respective base station gNB₁ to gNB₅ may be connected to the core network 102, e.g. via the S1 interface, via respective backhaul links 114₁ to 114₅, which are schematically represented in Fig. 1(b) by the arrows pointing to "core". The core network 102 may be connected to one or more external networks. Further, some or all of the respective base station gNB₁ to gNB₅ may connected, e.g. via the S1 or X2 interface or the XN interface in NR, with each other via respective backhaul links 116₁ to 116₅, which are schematically represented in Fig. 1(b) by the arrows pointing to "gNBs".

For data transmission a physical resource grid may be used. The physical resource grid may comprise a set of resource elements to which various physical channels and physical signals are mapped. For example, the physical channels may include the physical downlink, uplink and sidelink shared channels (PDSCH, PUSCH, PSSCH) carrying user specific data, also referred to as downlink, uplink and sidelink payload data, the physical broadcast channel (PBCH) carrying for example a master information block (MIB) and a system information block (SIB), the physical downlink, uplink and sidelink control channels (PDCCH, PUCCH, PSSCH) carrying for example the downlink control information (DCI), the uplink control information (UCI) and the sidelink control information (SCI). For the uplink, the physical channels may further include the physical random access channel (PRACH or RACH) used by UEs for accessing the network once a UE synchronized and obtained the MIB and SIB. The physical signals may comprise reference signals or symbols (RS), synchronization signals and the like. The resource grid may comprise a frame or radio frame having a certain duration in the time domain and having a given bandwidth in the frequency domain. The frame may have a certain number of subframes of a predefined length, e.g. 1ms. Each subframe may include one or more slots of 12 or 14 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

The wireless network or communication system depicted in Fig. 1 may by a heterogeneous network having distinct overlaid networks, e.g., a network of macro cells with each macro cell including a macro base station, like base station gNB₁ to gNB₅, and a network of small cell base stations (not shown in Fig. 1), like femto or pico base stations.

In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-Advanced Pro standard or the 5G or NR, new radio, standard.

In mobile communication networks, for example in a network like that described above with reference to Fig. 1, like an LTE or 5G/NR network, there may be UEs that communicate directly with each other over one or more sidelink (SL) channels, e.g., using the PC5 interface. UEs that communicate directly with each other over the sidelink may include vehicles communicating directly with other vehicles (V2V communication), vehicles communicating with other entities of the wireless communication network (V2X communication), for example roadside entities, like traffic lights, traffic signs, or pedestrians. Other UEs may not be vehicular related UEs and may comprise any of the above-mentioned devices. Such devices may also communicate directly with each other (D2D communication) using the SL channels.

When considering two UEs directly communicating with each other over the sidelink, both UEs may be served by the same base station so that the base station may provide sidelink resource allocation configuration or assistance for the UEs. For example, both UEs may be within the coverage area of a base station, like one of the base stations depicted in Fig. 1. This is referred to as an "in-coverage" scenario. Another scenario is referred to as an "out-of-coverage" scenario. It is noted that "out-of-coverage" does not mean that the two UEs are not within one of the cells depicted in Fig. 1, rather, it means that these UEs
- may not be connected to a base station, for example, they are not in an RRC connected state, so that the UEs do not receive from the base station any sidelink resource allocation configuration or assistance, and/or
- may be connected to the base station, but, for one or more reasons, the base station may not provide sidelink resource allocation configuration or assistance for the UEs, and/or
- may be connected to the base station that may not support NR V2X services, e.g. GSM, UMTS, LTE base stations.

When considering two UEs directly communicating with each other over the sidelink, e.g. using the PC5 interface, one of the UEs may also be connected with a BS, and may relay information from the BS to the other UE via the sidelink interface. The relaying may be performed in the same frequency band (in-band-relay) or another frequency band (out-of-band relay) may be used. In the first case, communication on the Uu and on the sidelink may be decoupled using different time slots as in time division duplex, TDD, systems.

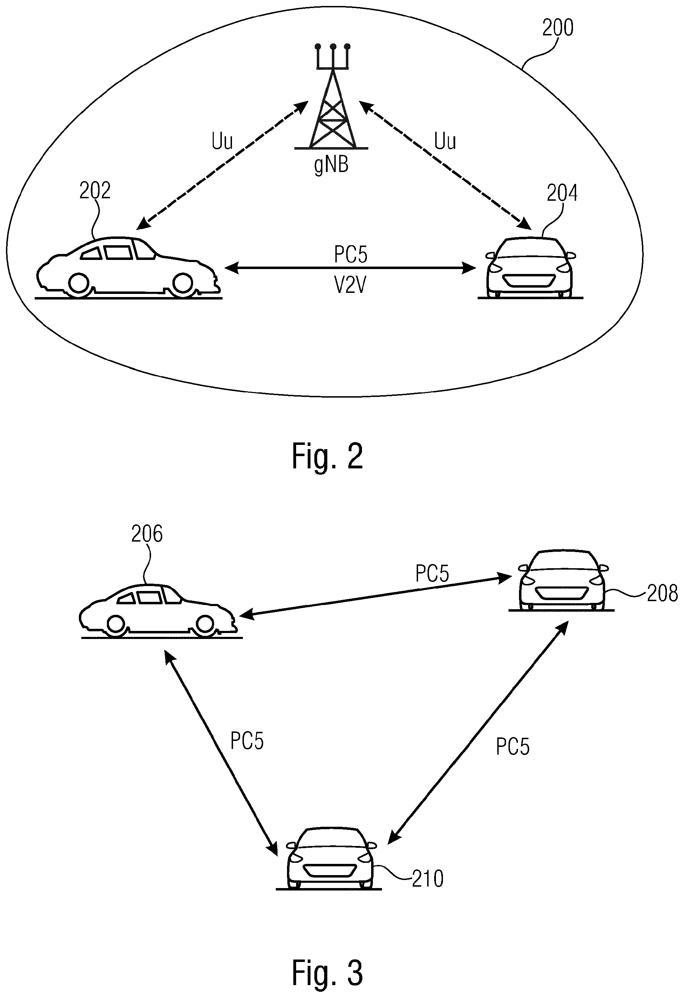

Fig. 2 is a schematic representation of an in-coverage scenario in which two UEs directly communicating with each other are both connected to a base station. The base station gNB has a coverage area that is schematically represented by the circle 200 which, basically, corresponds to the cell schematically represented in Fig. 1. The UEs directly communicating with each other include a first vehicle 202 and a second vehicle 204 both in the coverage area 200 of the base station gNB The vehicles schematically represent a UE such that a UE is not limited to a vehivcle. Both vehicles 202, 204 are connected to the base station gNB and, in addition, they are connected directly with each other over the PC5 interface. The scheduling and/or interference management of the V2V traffic is assisted by the gNB via control signaling over the Uu interface, which is the radio interface between the base station and the UEs. In other words, the gNB provides SL resource allocation configuration or assistance for the UEs, and the gNB assigns the resources to be used for the V2V communication over the sidelink. This configuration is also referred to as a mode 1 configuration in NR V2X or as a mode 3 configuration in LTE V2X.

Fig. 3 is a schematic representation of an out-of-coverage scenario in which the UEs directly communicating with each other are either not connected to a base station, although they may be physically within a cell of a wireless communication network, or some or all of the UEs directly communicating with each other are to a base station but the base station does not provide for the SL resource allocation configuration or assistance. Three vehicles 206, 208 and 210 are shown directly communicating with each other over a sidelink, e.g., using the PC5 interface. The scheduling and/or interference management of the V2V traffic is based on algorithms implemented between the vehicles. This configuration is also referred to as a mode 2 configuration in NR V2X or as a mode 4 configuration in LTE V2X. As mentioned above, the scenario in Fig. 3 which is the out-of-coverage scenario does not necessarily mean that the respective mode 4 UEs are outside of the coverage 200 of a base station, rather, it means that the respective mode 4 UEs are not served by a base station, are not connected to the base station of the coverage area, or are connected to the base station but receive no SL resource allocation configuration or assistance from the base station. Thus, there may be situations in which, within the coverage area 200 shown in Fig. 2, in addition to the mode 3 UEs 202, 204 also mode 4 UEs 206, 208, 210 are present.

In the above-described scenarios of vehicular user devices, UEs, a plurality of such user devices may form a user device group, also referred to simply as group, and the communication within the group or among the group members may be performed via the sidelink interfaces between the user devices, like the PC5 interface. For example, the above-described scenarios using vehicular user devices may be employed in the field of the transport industry in which a plurality of vehicles being equipped with vehicular user devices may be grouped together, for example, by a remote driving application. Other use cases in which a plurality of user devices may be grouped together for a sidelink communication among each other include, for example, factory automation and electrical power distribution. In the case of factory automation, a plurality of mobile or stationary machines within a factory may be equipped with user devices and grouped together for a sidelink communication, for example for controlling the operation of the machine, like a motion control of a robot. In the case of electrical power distribution, entities within the power distribution grid may be equipped with respective user devices which, within a certain area of the system may be grouped together so as to communicate via a sidelink communication with each other so as to allow for monitoring the system and for dealing with power distribution grid failures and outages.

Naturally, in the above-mentioned use cases sidelink communication is not limited to a communication within a group. Rather, the sidelink communication may be among any of UEs, like any pair of UEs.

It is noted that the information in the above section is only for enhancing the understanding of the background of the invention and therefore it may contain information that does not form prior art that is already known to a person of ordinary skill in the art.

Starting from a prior art as described above, there may be a need for improvements in the communication for multiple users.

Embodiments of the present invention are now described in further detail with reference to the accompanying drawings in which:
- Fig. 1: is a schematic representation of an example of a terrestrial wireless network;
- Fig. 2: is a schematic representation of an in-coverage scenario in which two UEs directly communicating with each other are both connected to a base station;
- Fig. 3: is a schematic representation of an out-of-coverage scenario in which the UEs directly communicating with each other without a base station;
- Fig. 4: is a schematic representation of a 3GPP channel structure for multicast broadcast in a single frequency network (MBSFN) ;
- Fig. 5: is a schematic representation of a mapping the multicast channel (MCH) to the physical channel PMCH according to embodiments;
- Fig. 6a: is a schematic representation of a part of the wireless communication network according to an embodiment;
- Fig. 6b: shows a schematic block diagram of the wireless communication network of Fig. 6 in a configuration in which a UE is a member of two multicast groups according to an embodiment;
- Fig. 7: shows a schematic block diagram of a wireless communication network according to an embodiment having a database with permission information stored thereon;
- Fig. 8: is a schematic representation of a single frequency network in an area where cells of a network overlap according to an embodiment;
- Fig. 9: is a schematic representation of a coordinated scheduling in the overlapping cells of Fig. 8 according to an embodiment;
- Fig. 10: is a schematic representation of a UE being arranged in the overlap region according to an embodiment;
- Fig. 11: is a schematic representation of aperiodic transmission according to an embodiment; and
- Fig. 12: is a schematic representation of a resource element having a plurality of resource blocks arranged in a time/frequency grid according to an embodiment.

Equal or equivalent elements or elements with equal or equivalent functionality are denoted in the following description by equal or equivalent reference numerals even if occurring in different figures.

In the following description, a plurality of details is set forth to provide a more thorough explanation of embodiments of the present invention. However, it will be apparent to those skilled in the art that embodiments of the present invention may be practiced without these specific details. In other instances, well known structures and devices are shown in block diagram form rather than in detail in order to avoid obscuring embodiments of the present invention. In addition, features of the different embodiments described hereinafter may be combined with each other, unless specifically noted otherwise.

In 3GPP Release 14: mobile communication radio access networks, the multicast transmission is realized via a specific subframe configuration. The subframe carriers standard compliant mapped control information, and special mapped data (increased cyclic prefix, different subcarrier spacing, resource block configuration, huge codewords).

User equipment (UEs) who are not able to participate can decode the control information and neglect the data. The system is designed for broadcast operation, i.e. all the cell associated UEs get the same information, regardless of multicast participation or not. Since every UE participating has to be enabled for decoding the multicast channel, the modulation and coding scheme is robust. This enables successful decoding of the broadcast message for UEs located at the cell edge as well as UEs with bad channel conditions. However, UEs with good signal quality does not benefit from it. The resources of the whole multicast subframe are always occupied for the logical physical channel PMCH (Physical Multicast Channel). In addition, the subframe configuration for multicast must be the same for all participating cells, so there is interference with non-multicast subframes.

Thus, the resource allocation cannot be performed dynamically, such that the capacity for the multicast channel can be increased or decreased. In addition, a modulation and coding scheme (MCS) cannot be applied for each user group separately. Due to the broadcast nature, latency of multicast transmissions are not of primarily interest. Therefore, it is not feasible to enable low-latency multicast operation within the RAN (Radio Access Network) in such a scheme.

That is, a LTE multicast is obtained per subframe restructuring. A resource can only be given in large scales. The LTE multicast is designed for broadcast applications. Single frequency network operation is performed on large areas. In those scenarios, relaxed latency constraints are present, e.g., there is no real time requirement.

Current state of the art is the FeMBMS (Further evolved Multimedia Broadcast Multicast Service) mode in 3GPP Release 15. Focusing on the physical layer there is no multicast mode in 5G New Radio (NR) yet defined. To inform an UE about the resource mapping the downlink control information is send. There are various modes, but the main data DCI format is for unicast traffic only [3GPP36212]. The Downlink Control Information (DCI) carries the basic scheduling information, thus indicating which resource block is for which UE. Control information indicated by DCIs are for all UEs or specific UEs, but the PDSCH (Physical Downlink Shared Channel) scheduling is always UE specific (C-RNTI: Cell Radio Network Temporary Identifier). For Multicast in 3GPP LTE there is specific M-RNTI defined and signaling is done via DCI Format 1C. The Format 1C only defines the MCS level of the multicast subframe and not the allocation. The allocation is done via SIB2 and SIB13 and only defines the subframes which carry the multicast subframes and their periodicity.

That is, in LTE there exits eMBMS (evolved Multimedia Broadcast Multicast Service) but in 5G NR (5G new radio) no multicast standard is implemented. When looking at the DCI (downlink control information) definitions in 3GPP, there is presented a unicast DCI and a multicast control information. It is undefined how the UE knows which DCI is for itself. It is undefined if a single UE can be a member of different unicast/multicast groups. It is further undefined if multiple RNTI (radio network temporary identifier) can be used for a single UE at the same time.

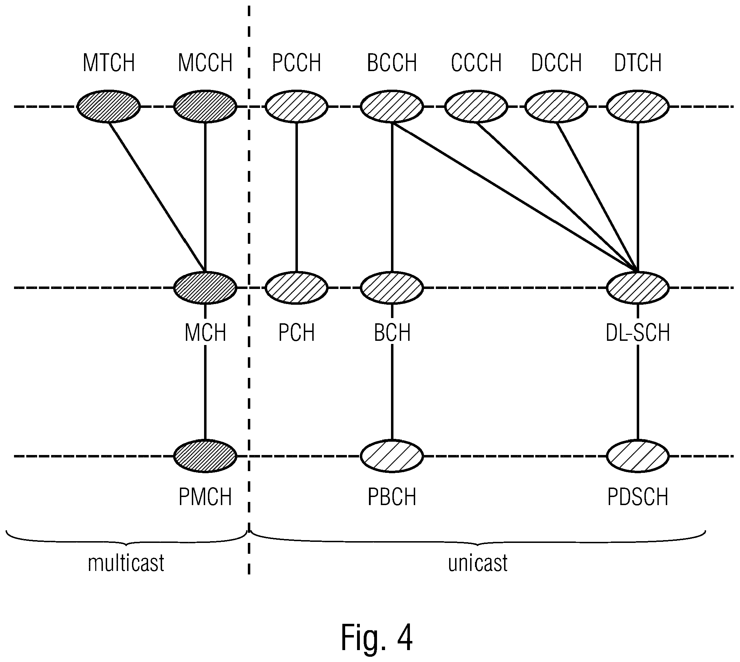

Fig. 4 is a schematic representation of a 3GPP channel structure for multicast broadcast in a single frequency network (MBSFN) as described in Chapter 15.3.5 in 3GPP 36.300 and [STN01].

Embodiments relate to a communication system, which is able to communicate via multicast and unicast within the same scheduling regime. Moreover, embodiments define a contention-free protocol to obtain quality information of the multicast members.

Embodiments are based on a DCI format which indicates to a group of UEs a multicast codeword. This means that the multicast data can be scheduled like unicast data via resource blocks within the whole downlink grid. The descrambling/decoding sequence can be known a priori or signaled to the participating UEs. This may be used for decoding the codeword within the scheduled resource blocks by more than one UE. The proposed DCI carries a field defining the mode and/or a bit field describing the a priori sequence. That is, a unicast frame or slot may be decoded by more than one UE and thus be used as a multicast transmission.

A multicast membership can be predefined via UE predefined configuration e.g., in the SIM (subscriber identity module) card, or signaled by the core network, e.g., via the IMSI (international mobile subscriber identity) identification. A multicast group then can be formed upon those information and the UEs may be informed via a new DCI defined for that purpose.

Embodiments further propose a new DCI format for emergency multicast messages. This DCI informs every UE within reach of the cell about a multicast codeword which can be decoded by every UE without any prior signaling. The corresponding codeword is not scrambled by UE specific RNTI and contains emergency information such as disaster warning. That is, the proposed DCI format may be used to define a multicast codeword. Optionally, a pre-shared decryption key may be transmitted or distributed by a unicast. A multicast group may be formed or defined by having the UE being a member of a group, for example, using a SIM card, compare 5G LAN. Further, multicast emergency messages may be received without membership to a specific group.

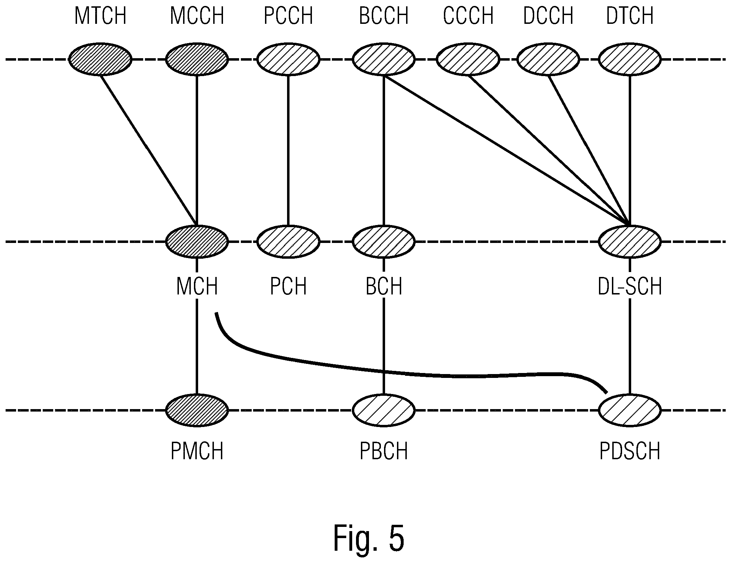

Embodiments relate to a mapping on a channel structure. As shown in the schematic representation of Fig. 5, instead of mapping the multicast channel (MCH) to the physical channel PMCH, embodiments allow to map the MCH to the PDSCH (physical downlink shared channel). This mapping may be based on the proposed DCI format described above. The DCI accompanies the mapped resources in PDSCH. The mapping can be done fully (for a given subframe/slot) or is a subset in the PDSCH. The multicast channel transportblock (MCH-TB) may be mapped via the scheduler to one or more PDSCH RBs (resource blocks) with corresponding DCI in PDCCH (physical downlink control channel).

Furthermore, the multicast channel (MCH) may also piggyback information about subgroups (down to unicast) within self or allow nested subgroups, in order to enable subgroup cause within the (sub)group. That is, the multicast channel may be mapped to the PDSCH resource elements and/or the PMCH (physical multicast channel) may be redefined as a subset of the PDSCH. In other words, Fig. 5 shows an updated 3GPP channel structure for Multicast Broadcast Single Frequency Network (MBSFN).

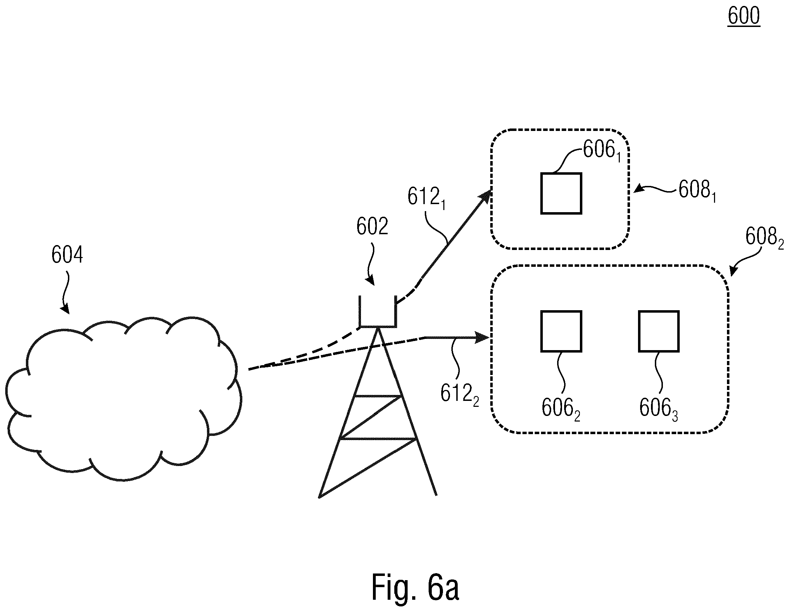

Fig. 6a is a schematic representation of a part of the wireless communication network, like the one described with reference to Fig. 1, and illustrates a cell of the network mentioned above or one of a plurality of radio access networks available in such a wireless communication network. A base station 602 is configured for operating at least one cell of the plurality of cells of network 600. The base station 602 is configured for providing a content 604 within the at least one cell. The content 604 may be data derived from an event or a data source. For example, a specific information, a video stream, an audio stream or other digitally encoded information may be at least a part of the content 604.

In the network 600, one or more UEs 606₁, 606₂ and 606₃ may be within range of the base station 602. A number of UEs may be arbitrary and is selected so as to be three by way of example only.

UEs 606₁ to 606₃ may be grouped to one or more groups 608₁ and/or 608₂. UEs 606 may be formed or may comprise devices or functionalities as described in connection with Fig. 1 but also relate to other devices such as the loT devices 110. Each group described herein may comprise one or more apparatuses or UEs.

The base station 602 is configured for generating multicast signals 612₁ and 612₂, both being base on the same content. The multicast signals 612₁ and 612₂ may be different deductions or derivatives from the content 604. The deductions may be generated by base station 602 or may be received by the base station 602, for example, from an external or remotely connected data source.

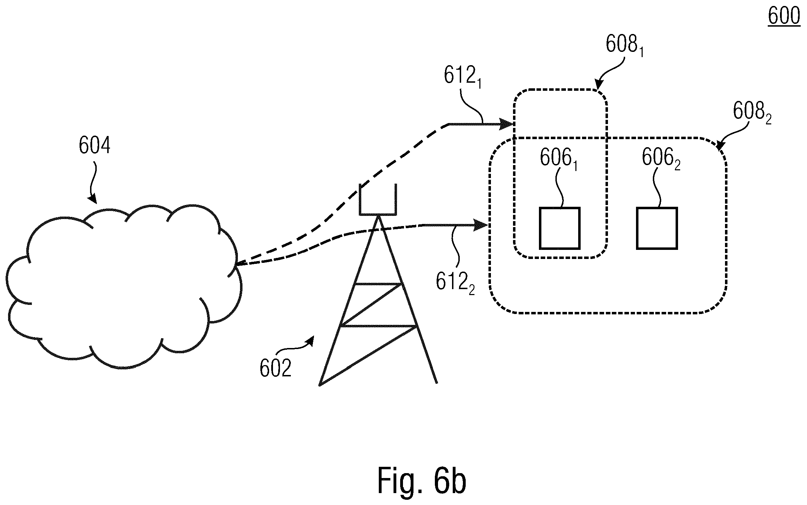

For example, different deductions may provide for the content 604 in different latencies, quality levels such as resolution or bitrates or decrease of information. The term deduction also relates to different degrees of an incremental coding or the like. That is, the derivatives to be transmitted with the multicast signal 612₁ and 612₂ may be obtained from the same content 604. For example, an incremental encoding of the content may be used. As described in connection with Fig. 6a, each of the multicast signals 612₁ and 612₂ may provide for signals or information that may be used or decoded independently. Alternatively, the multicast signal 612₁ and 612₂ may be obtained based on an incremental encoding as described, for example, in connection with Fig. 6b. A basis version of the content 604 may be transmitted to group 608₂, wherein additional information by use of the incremental encoding may be transmitted to the group 608₁ which requires both multicast signals 612₁ and 612₂ to decode the content 604 with the increased quality. Alternatively or in addition, the derivatives of the contents 604 may be obtained based on a complementary encoding of the content. That is, the multicast signal 612₁ and 612₂ may be obtained based on incremental video/audio encoding, may be used to improve accuracy of sensor-data such as temperature or the like, may provide for increasing update rates of information or the like.

The multicast signals 612₁ and 612₂ may be prepared group-wise for UEs 606₁, 606₂ and 606₃ respectively contained in the group. That is, a multicast signal 612₁ and/or 612₂ may intentionally be directed to more than one device. To direct a wirelessly transmitted signal to more than one device is to be understood not only in a physical manner as a wireless signal within a cell may commonly be understood as a broadcast signal but as a signal that is intended to be decoded by at least one device. The deductions may also be of a same information level whilst being differently encoded, for example, using different MCS (modulation coding scheme) allowing to consider different overall channels to the respective group 608₁, 608₂, respectively to be considered.

The base station 602 is configured for providing the multicast signal 612₁ to group 608₁ and to provide the multicast signal 612₂ to group 608₂. For providing the multicast signals 612₁ and 612₂ same or different unicast frames, for example, in the PDSCH. That is, the multicast signal 612₁ may be transmitted in a first unicast frame wherein the multicast signal 612₂ may be transmitted in the same or a different, second unicast frame. The base station 602 may be configured for grouping the groups 608, and 608₂ so as to have different average channel qualities between the base station 602 and the respective UEs of a group. For members of a group that have a lower channel quality, a higher resilience may be used when compared to a multicast signal being used for a group of UEs which has a higher channel quality.

In other words, a well-suited MCS level may be used for successful reception by the UE. Since not all UEs can support the highest possible MCS level in a multicast transmission according to embodiments, embodiments propose a multiplex scheme of MCS levels to support different link-wise quality situations at the same time. By generating multicast groups within the same multicast transmission scheme, it is proposed to send the same content for different link qualities. Depending on the MCS level, the signal may comprise different degrees of resilience, e.g., the lower the MCS, the higher the resilience. That is, the base station 602 may be configured for transmitting the multicast signals 612₁ and 612₂ so as to comprise different degrees of resilience. For example, the multicast signal 612₁ and 612₂ may comprise different MCS levels allowing to have different degrees of resilience, different coding of the signals or different codings of the content 604. Alternatively or in addition, a retransmission pattern of the multicast signal 612₁ and 612₂ may be adapted or implemented differently. For example, when referring to a blind HARQ (hybrid automatic repeat request) pattern: a codeword may be transmitted twice in the same time slot but on different frequency resources. Alternatively or in addition, the codeword may be transmitted again in a subsequent or next time slot.

The coding of the data satisfies a different decoding scheme meaning that the lowest possible quality can be decoded and higher quality information increases the data quality (e.g., for video or audio content). The higher quality data streams adds to the lower quality base line on the data layer, hence the lower quality multicast group within the most resilient signal is a base line with lowest acceptable content quality and the next quality level of data can be used by UE to improve quality of the content in a differentially or independently encoded manner from previous resilient level. The maximum number of quality multicast groups may be defined by an algorithm and may be based on available resources for multicast transmission, UEs or participants in multicast transmission and collected CQls (channel quality indicator) from all, most or single UEs.

Fig. 6b shows a schematic block diagram of the wireless communication network 600 in a configuration in which the UE 606, may be a member of two groups 608₁ and 608₂ at a same time. For example, the multicast signals 612₁ and 612₂ are generated by the base station so as to provide the content 604 in view of a quality parameter. For example, the multicast signal 612₂ provides for the content 604 in a first quality, wherein the multicast signal 612₁ provides for the content 604 in a second, possibly higher quality, e.g., a higher bitrate or a higher resolution. The multicast signals 612₁ and 612₂ may provide for the content 604 in a way that each of the multicast signals 612₁ and 612₂ may be decoded independently. For example, the signal being more resilient or robust may be provided to all UEs or at least the group 608₂, wherein the content 604 may be provided in a better quality to group 608₁, the UE 606, respectively, forming a sub-group, based on a known good channel condition that allows for a less resilient signal. That is, a UE may be a member in two or more groups. The content in different multicast signals 612₁ and 612₂ may differ in view of a quality parameter.

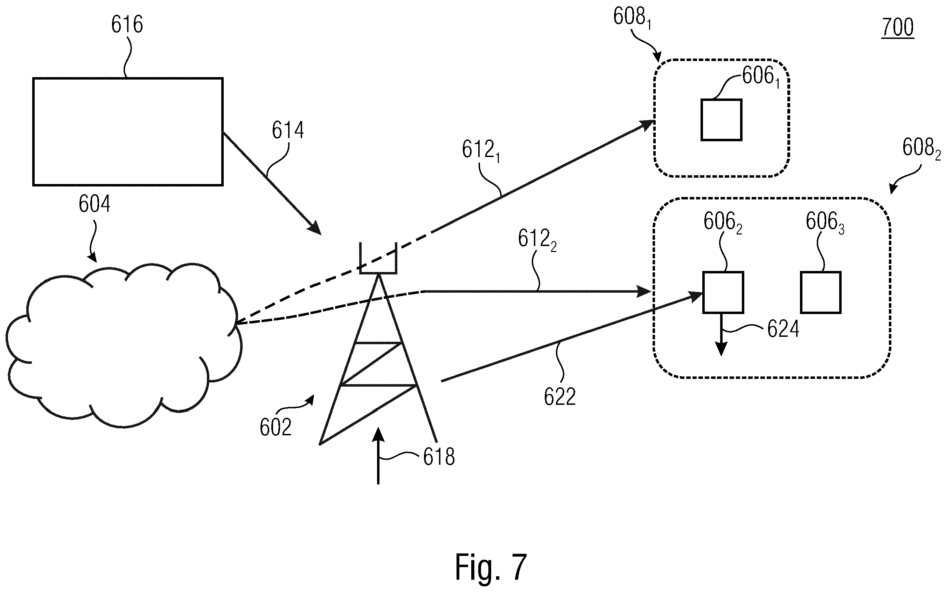

Fig. 7 shows a schematic block diagram of a wireless communication network 700 according to an embodiment. The wireless communication network 700 may comprise the wireless communication network 600 described in connection with Fig. 6a. The base station 602 may be configured for obtaining, at least for the plurality of UEs to be grouped into one or more groups 608₁ and/or 608₂ a permission information 614. The permission information 614 may indicate a permission of a UE 606₁ to 606₃ to receive a specific derivative or deduction of the content 604. The base station 602 may be configured for forming one or more of groups 608₁ and 608₂ based on the permission information 614. The permission information 614 may be received from a database 616 having stored thereon respective information. It is to be noted that the permission information 614 may, at least in part, be obtained implicitly. In absence of a specific permission for a specific UE may be interpreted as having a lowest or, alternatively, highest permission level. For example, all UEs being known to the base station 602 so as to receive content 604 may be allowed to receive a basis version or lowest quality of the content 604. Specific permission information 614 may indicate UEs to receive a higher quality, e.g., the UE 606₁. The base station 602 may form a group responsive hereto and may provide the respective group 608₁ with a suitable multicast signal 612₁ providing for the content 604 in a higher quality.

Alternatively or in addition, the base station may be configured for obtaining, for each of the multicast UEs 606₁ to 606₃ a quality information indicating a transmission quality between the UE and the base station. The base station 602 may be configured for forming the groups 608, and 608₂ based on the quality information 618. For example, each of the UEs 606, to 606₃ may report its channel quality, for example, using a CSI (channel state information) signal or the like. The base station may thus form groups 608₁ and 608₂ so as to group UEs with a similar channel quality together.

Alternatively or in addition, the quality information 618 may be received as a joint information as will be described later. This may allow for implicitly forming groups by way of identifying, at least in a coarse manner, an amount of UEs having different degrees of channel quality. The multicast signals 612₁ and 612₂ may be adapted in view of their transmission parameters so as to satisfy the requirements of the respective channels, wherein, for example, one channel may be assumed for each group. This channel may be considered jointly for all of the UEs.

The base station 602 may be configured for combining the quality information of the UE of one group, e.g., group 608, to obtain a first combined quality information. For example, this may be performed when receiving a dedicated message from the UE. Alternatively or in addition, the base station may derive the combined quality information. Based thereon, a transmission parameter such as a shape, a direction or a power of a load, a MCS or the like may be adapted for the respective multicast signal 612₁. Alternatively or in addition, such a combined quality information may be generated or obtained by the base station 602 by combining respective quality information of saver UE for group 608₂. Alternatively or in addition, the combined quality information for group 608₂ may be derived by the base station 602. Deriving such a combined quality information may comprise own considerations of the channel but may also comprise a reception of the quality information 618 from external database. The base station 602 may be configured for adapting a transmission parameter of the multicast signal 612₂ based on the combined quality information of group 608₂.

Based on a consideration of the quality information 618 indicating the transmission quality to the respective UE, the base station may include a UE into a group or may exclude a UE from a group. For example, a change in the transmission quality, i.e., changes in the quality information 618 may lead the base station 602 to reorganize groups 608₁ and 608₂ in view of their member-UEs. Alternatively or in addition, a change in the quality information 618 may lead to variations in the transmission parameters of the multicast signal 612₁ and/or 612₂. Considering the group of UEs as a single, averaged receiver allows for a high-quality processing of multicast signals 612 in unicast frames as unicast frames are intentionally designed to provide a specific information to a single receiver, therefore allowing the signal to be adapted to the specifics of the channel to this single receiver.

However, in particular, when having large groups having more than two UEs, e.g., at least 3, at least 5, at least 10, at least 100 or even more, may lead to a situation, where the averaging leads to a poor channel quality to single members of the group. Put into different words, the adaptation of the multicast signal 612₁ and/or 612₂ may be insufficient for all of the members of a specific group. To increase reliability of communication, the base station may be configured for transmitting, to a UE of a group, for example, UE 606₂ of group 608₂ a supplementary or auxiliary unicast transmission 622. The unicast transmission 622 may be adapted according to a channel between the base station 602 and the UE 606₂ such that insufficient adaptations of the multicast signal 612₂ may be overcome or at least partly be compensated. The supplementary unicast transmission 622 may be provided by the wireless communication network by use of prior or old information in view of a former or prior unicast transmission to the respective UE.

The use of supplementary unicast transmission may be based on the finding that a reliable multicast transmission may rely on channel conditions and chosen MCS (modulation coding scheme) levels. In a unicast transmission, a MCS level is usually selected according to reported CQI from the UE. In multicast transmissions, the selected MCS is fixed for all UEs, in particular, when using the unicast frame according to embodiments. Embodiments propose a scheme, if one or some UEs report bad CQI for the selected multicast resource block (RB), the UE is scheduled in a unicast manner without leaving the multicast group. If the MCH-TB cannot be decoded due to bad channel conditions, the gNB scheduler selects a better suited RB to send the according codeword in a unicast manner. For many users in the multicast scheme, this may require a new reporting scheme for CQI or equivalent. If channel conditions, change for multicast RBs to support the MCS level for the prior scheduled unicast transmission, the UE may be switched over to multicast RB again (i.e., simultaneous scheduling between unicast and multicast transmission). In some situations, it may be also beneficial in view of an increase of efficiency or channel quality, to use multiple beams to serve the same multicast group in different spatial regions. That is, the supplementary unicast frame may be performed in addition or alternatively to the multicast transmission.

The base station 602 may start for such a supplementary or auxiliary unicast transmission to single UEs based on a detected changed quality of transmission between the base station 602 and UE 606₂. Alternatively or in addition, the base station 602 may start the supplementary unicast transmission 622 based on a request received. The request may indicate a request for the supplementary transmission of the content 604 as a unicast. The request may be transmitted, for example, by the UE 606₂ and/or by a central network node. Although the wireless communication network 700 is described as the base station 602 is performing the supplementary unicast transmission 622, it is, additionally or as an alternative, possible that a different base station performs the supplementary unicast transmission. This may allow for obtaining a different channel characteristic and/or a different direction of the channel which is possibly not jammed for performing such a retransmission. There is, during times where a channel or channel quality between single UEs to the base station 602 providing for the multicast signals is low or below a threshold value, the wireless communication network 700 may provide for supplementary unicast transmissions so as to ensure that even UEs with a low channel quality receive the content 604. This is of particular interest when considering emergency transmissions or the like. For example, the wireless network may be configured for repeatedly transmitting data related to the respective deduction by repeatedly using multicast signal 612₁ and 612₂. For example, the content 604 may be an event of a certain duration, e.g., a duration of an audio-file or a duration of an event to be broadcasted, e.g., a soccer game or the like, such that multicast signals 612₁ and 612₂ may repeatedly be transmitted so as to provide for a continuous provision of the content 604. During a time of providing the content 604, the wireless network may start the supplementary transmission 622, also repeatedly, based on an indicated channel quality being below a channel quality threshold. When the indicated channel quality is equal or above a channel quality threshold, the wireless network may end the repetition of the supplementary transmission.

The wireless network 700 may be configured for transmitting the supplementary unicast transmission 622 based on a request 624. However, the base station 602 may determine the low channel quality on its own. The request 622 may be received in a same or a different unicast frame as the multicast signal 612₂ is transmitted. That is, the request 624 may be transmitted on a same channel as the multicast signal 612₂ is transmitted. Alternatively or in addition, the request 624 may be transmitted via a sidelink, i.e., a different communication channel, different communication protocol and/or a different medium.

The wireless network may be configured to indicate, to one or more, i.e., at least a subset of the UEs 606, to 606₂ one or more resources, one or more channels and/or one more sidelinks to be used for the request signal 624 of Fig. 7. For example, the UE 606₂ of the wireless communication network 700 may transmit the request signal 624 when it is intended to receive the multicast signal 612₂ or when it has received the multicast signal 612₂ but when it is unable to successfully decode the multicast signal 612₂. That is, the base station may inform the UEs where it is expecting the respective request. The request 624 may be the quality information 618 or a basis thereof. That is, a quality information 618 may implicitly be considered as a request for supplementary unicast transmission. For example, the base station 602 may inform other nodes where it expects the quality information 618, thereby also indicating a location or channel of the request 624.

The supplementary unicast transmission 622 may be provided by the wireless network 700 by one or more of a redundant transmission of the multicast signal 612₂ from a same or a different base station, a retransmission of the multicast signal 612₂ in a different frequency band, encoded with a different code, in a different spatial resource and/or a different time slot of the wireless communication network.

Although the wireless communication networks 600 and 700 are described as having in the illustrated parts a single base station, as described in connection with Fig. 1, there may be a plurality of base stations in a network. Base stations of adjacent cells may be configured for providing the content 604 within the network which is operated as a single frequency network. Such a network is a network where several base stations or transmitters simultaneously send a same signal over the same frequency channel.

Further embodiments relate to an encryption function for UEs as members in the multicast group, e.g., group 608₁ and/or 608₂. The MCH-TB encryption may be option and, if enabled, only applicable for authorized UEs. That is, the accessibility of this function may be restricted. The key for encryption can be on the codeword itself via a pre-shared key (decryption key in SIM on UE). Another option is that the key is given to the UE via unicast transmission and triggered via a separate software or hardware entity, e.g., an application or APP. This may require a trigger function on the UE and a corresponding function within the gNB for communicating on higher layer. The encryption can be done on PHY layer or application layer as illustrated in the table below:

| Encryption PHY | App request key | Preshared key in SIM |
|---|---|---|
| YES | YES (lower layer, interface) | YES |
| NO | YES (higher layer, non 3GPP) | n.a. |

To protect the encryption key from theft, known encryption methods like forward secrecy may be used. To enable the nested subgroups with encryption for each subgroup, the encryption may be piggybacked for each subgroup. A PDSCH RB (resource block) may be used for MCH-TB and may be encrypted via encryption such as SNOW 3G for authorized UEs. Encryption may be optional for the PHY. Alternatively or in addition, an application may receive an encryption key with higher layer functions.

Embodiments further relate to a method within the UE for an application to request via an interface an encryption of the multicast traffic. Such a request may be issued by the application via a Radio Resource Control (RRC) message as defined in, for example, 3GPP 36.331 which is sent to the stack. The RRC message may be passed to the enabled lowerlayer encryption without informing the application of the details such as a used key, an encryption method, a hash algorithm or the like. The application just becomes informed that the encryption is enabled after the function within the stack enabled the encryption successfully, otherwise a negative acknowledgement (NACK) may be sent from the RRC to the application. The encryption key may be negotiated between the UE and the gNB (base station) and may be used for the PHY layer encryption of the codeword for the NACK-TB. For non-participating UEs in the multicast, the transmission may look like a unicast transmission from gNB to a UE. One MCH-TB may be encrypted such as that each UE may decrypt with their respective private key, which may be implemented as an asymmetric encryption. An application (APP) may trigger the functionality (RRC) in the UE stacked to request a key for lower layer encryption. The key is not needed to be shared with the APP but may be used for PHY encryption between the UE and the base station for MCH-TB.

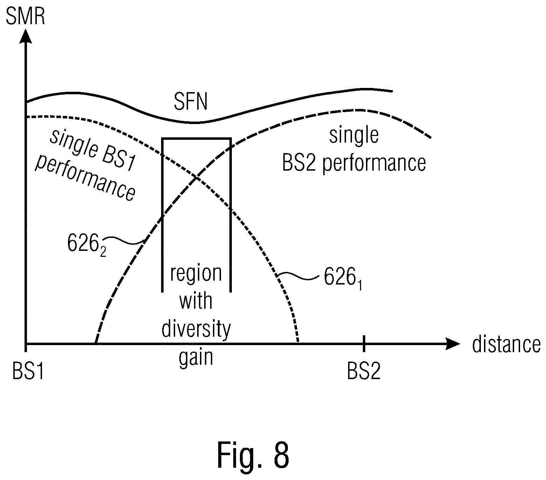

Further embodiments allow to efficiently enable multicast transmission also for UEs distributed over multiple cells. Embodiments propose single frequency networks (SFN), where the resource assignment as well as codewords of the multicast messages may by synchronized over a cluster of cells. In general, SFN may lead to a direct power gain in contrast to a network, where each cell independently schedules the resource as shown in a schematic way in Fig. 8. There, it may be seen that a diversity gain may be obtained by using SFN and in a region where the base stations overlap when compared to both signals 626₁ and 626₂ being transmitted from each base station independently. However, to reduce complexity of the base station sides and to reduce control overhead between base stations (e.g., scheduler information may be needed to be shared), embodiments propose that each base station can operate at different synchronization levels.

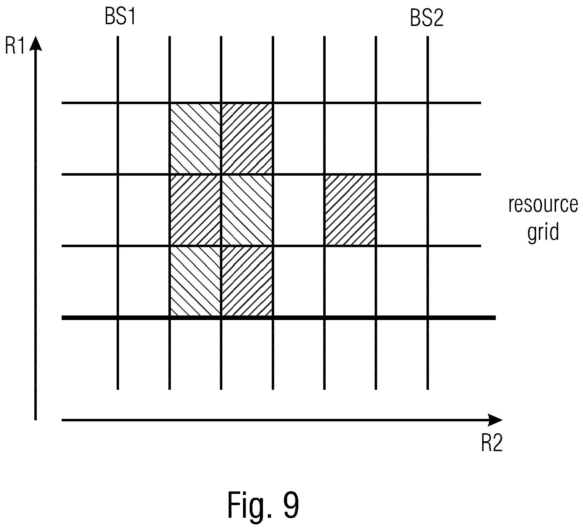

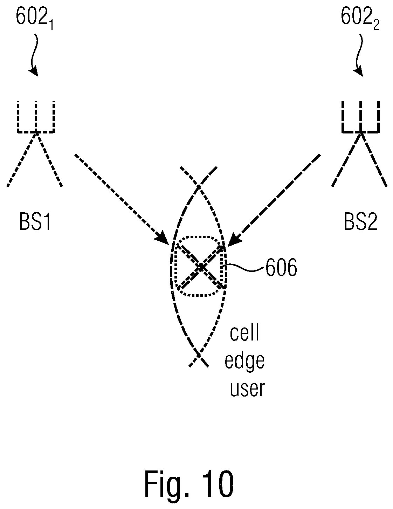

In particular, the base stations may serve the multicast users on different resources with different or same coding as illustrated, for example, in Fig. 9. A resource grid may be spanned by resources R₁ and R₂, for example, by two of a time, a frequency, a spatial region and a code or the like. Consequently, each base station can use its own scheduler and reduced or possibly unenhanced control information may be shared between the base stations, thereby avoiding transmitting of enhancements or the like. Nevertheless, multicast users within a certain region, e.g., the overlap region in Fig. 8, cell edge users illustrated in Fig. 10 or the like, the multicast messages of different base stations can still be received and decoded. Therefore, even though no SFN is used in some embodiments, the user can still benefit from the signal of multiple base stations.

To find multicast groups within a network, a table of groups can be created. The table may be stored as a database. The table can be created for different cluster sizes, like local, regional and global. The table may contain for each multicast group identifier the assigned SIM entries, such that all users of a group can be found by its SIM-card reference. Those embodiments allow to enable multicast for distributed users over different eNB. The embodiments are directed to a wireless communication network having at least a first and a second base station operating cells that spatially overlap. A base station may be configured for providing the content within the at least one cell operated by the base station by transmitting multicast signals as described in connection with Fig. 6 and Fig. 7 by using at least one unicast frame.

The first base station and the additional second base station may be configured for operating the overlapping cells in a coordinated manner, i.e., with a coordinated resource management. That is, the synchronization levels of the base stations may be aligned for RF transmission purposes, but the data is not necessarily sent on the same time/frequency resources. This means the UE may see two unicast frames from two different base stations and may combine the information on a decoding level instead on an RF level as it may be performed in a SFN. In other words, base stations BS1 and BS2 may avoid collisions in the resource grid illustrated in Fig. 9. The UE 606 illustrated in Fig. 10 may thus improve its data reception. The mentioned database may thus have stored groups of apparatuses for different cluster sizes. At least one apparatus may be part of at least two cluster sizes. However, the base station may be configured for jointly encoding the deductions of the content for a respective group of apparatuses based on the databased having stored therein an identifier related to the apparatus and information indicating a membership to a group.

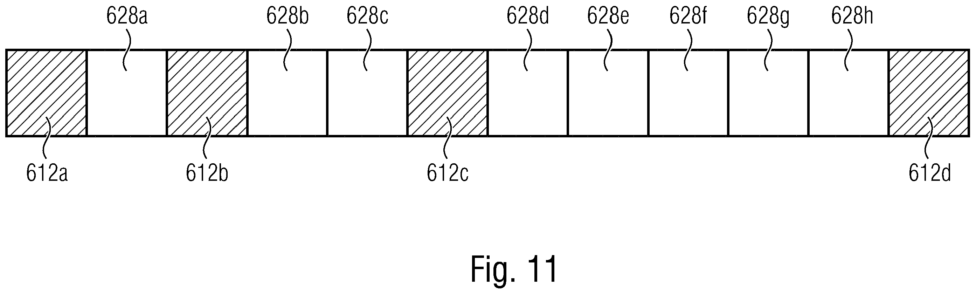

The base station being used in present embodiments may be configured for providing information about a periodicity of multicast signals, e.g., the multicast signal 612₁ and/or 612₂. One or more of the UEs of the wireless communication network may be configured for omitting a decoding of a message received from the base station based on the periodicity in knowledge that the omitted message is unrelated to the respective multicast signal 612₁ and/or 612₂. For example, when referring to Fig. 11, the multicast signal 612 may be transmitted repeatedly in different instances 612a, 612b, 612c and 612d, wherein a number of repetitions may be any number than larger than 1. Between two subsequent transmission, a constant or variable time interval may be arranged which is illustrated by frames 628 being unused for the multicast transmission 612. By informing the UE when to expect the next transmission or, alternatively or in addition, when to not expect a subsequent transmission, a blind decoding of a respective control channel can be omitted, which provides for a high efficiency. That is, the base station may provide for an a priori information that it is necessary to decode frames or resource elements in connection with the multicast signal 612.

In other words, embodiments propose a new DCI derivate to advise an enhanced mode of the multicast traffic. If conditions apply, the sub-DCI can advise periodically to participating UEs of the next codeword from multicast transmission. This sub-DCI may be called semi-persistent-multicast-DCI (SPS-MC-DCI) and may enable a spatial mode for multicast transmission to either decrease a latency (a priori known scheduled codeword) or to increase reliability (blind HARQ). The scheduling of the SPS-MC-DCI and corresponding codeword may be done with help of channel quality indicator (CQI) from some or all UEs listening to multicast transmissions. The scheduling may be done like unicast scheduling schemes, meaning on a resource block basis, down to one single resource block within a slot. The proposed DCI and SPS-MC-DCI may be used to advise the scheduled resource blocks.

In further other words, multiple multicast groups may be introduced with different qualities for different link qualities. The transmitted signals are chosen such that they provide different degrees of resilience. The multicast groups may be differentially encoded from most resilient signal to least resilient signal. The multicast group with the most resilient signal may receive a basis signal with a lowest quality. The multicast group with the next resilient level adds further information, differentially or independently encoded from previous resilient level. A number of suitable multicast groups may be determined by an algorithm.

Some embodiments described herein relate on how to generate or provide multicast signals. Other embodiments that may be combined, without any limitation, with those embodiments relate to concepts on how to inform the base station about the channel quality of UEs which are part of a multicast group.

A base station according to such embodiments may be configured for operating at least one of a plurality of cells of a wireless communication network. The base station may be configured for generating a plurality of multicast signals for a group of apparatuses based on a deduction from a content. For example, the multicast signal 612₁ and/or 612₂ may be transmitted. Whilst the wireless communication networks 600 and 700 were described as having different groups that are provided with the same content in different deductions, the present embodiments may also be implemented with only one single group or one single deduction of the content. By repeatedly transmitting multicast signals to the group, a plurality of multicast signals may be obtained. The base station is configured for adapting a transmission characteristic such as MCS, power, beamforming or the like, of the plurality of multicast signals based on a statistical distribution function of connectivity information. Each connectivity information being considered in the statistical distribution may indicate a connectivity between the base station and an apparatus of the group of apparatuses. That is, a statistic distribution of the channel quality to single UEs may be used to obtain a common, joint or single parameter or parameter set for transmitting a multicast signal. That is, the single setting is used for the complete group.

As described, the base station may be configured for receiving, from the plurality of apparatuses of a group 608₁ and/or 608₂ a feedback information indicating the connectivity information. The connectivity information may indicate the connectivity as a reception quality of a multicast signal of the plurality of multicast signals. The base station may be configured for adapting a transmission characteristic for transmitting a next or a later multicast signal of the plurality of multicast signals based on the plurality of feedback information. The base station may be configured for deriving the statistic distribution function from the connectivity information. For example, a median value, an average value or the like may be formed in view of the channel quality. Alternatively or in addition, a lowest or highest channel quality may be considered or taken into account when determining the transmission characteristic. Alternatively or in addition, a specific number or percentage of the members of the groups may be considered for successful transmission with the multicast signal, thereby allowing insufficient transmission or unsuccessful decoding at a possibly small number of members of the groups. Those members may be provided with supplementary unicast transmission as described herein.

The base station may be configured for associating a spatial information such as a location where the UE is located, with the connectivity information of the apparatus. The base station may be configured for deriving the distribution function based on the spatial information. That is, for example, the base station may determine different regions or beams to be transmitted. Optionally, the base station may itself form subgroups or groups and may decide which signals to be transmitted to which group, subgroup, respectively.

The base station may be configured for combining the connectivity information received from the plurality of apparatuses so as to obtained a combined connectivity information. The base station may be configured for adapting the transmission characteristic for transmitting the further, later, multicast signal of the plurality of multicast signals based on the combined connectivity information. As described, the base station may be configured for receiving the feedback information, the connectivity information respectively as a plurality of unicast information from the plurality of apparatuses. Each feedback information may indicate, therefore, the connectivity information of a respective apparatus. However, this may lead to a high amount of unicast messages to be transmitted to the base station although allowing for a precise determination.

To reduce the overhead, the base station may be configured for requesting a subset of apparatuses of the group of apparatuses to report the connectivity information of the respective apparatus. That is, the apparatus may report its connectivity information upon request. The base station may select the subset, for example, so as to be distributed over a specific spatial region, so as to comprise different channel qualities or the like. The base station may be configured for combining the respective feedback information received from the subset of apparatuses so as to obtain a combined feedback information. The base station may be configured for adapting the transmission characteristic for transmitting the second multicast signal of the plurality of multicast signals based on the combined feedback information.

For requesting the subset of apparatuses, the base station may be configured for transmitting a probe transmission, i.e., a transmission with no or an arbitrary payload which does not exclude a transmission of a useable payload. For the probe transmission, the base station may use a modulation coding scheme associated with the subset of apparatuses. The probe transmission may be transmitted to the subset of apparatuses so as to trigger the subset of apparatuses to report the reception of the probe transmission using a unicast channel from the respective apparatus to the base station. For adapting the transmission characteristic, the base station may be configured for adapting at least one of a number of beams used for transmitting the subsequent or next multicast signal, an orientation of a lobe and/or a null of at least one beam and a modulation coding scheme.

In other words, the gNB may perform a probing by sending marked probing packages with higher/lower MCS levels as currently active to the corresponding group (MCS level for members of group 2 only → excludes members of group and groups above 2) and issues a report function within the UE. For example, if MCS probing package can be decoded successfully, the UE does not report anything. Otherwise the UE sends a NACK. Only UEs receiving the probing package can report. The probing package may be embedded in the multicast stream but UEs are signaled for decoding the probing package on a unicast channel. Thus, it may be ensured that only selected UEs measure the probing package. That is, certain MCS may be deployed for certain multicast groups. Not limiting cases thereof are to probe higher MCS (higher rate), to probe lower MCS (lower rate) and/or devices with lower MCS report, that current MCS cannot be achieved. It may be selected which device reports, i.e., only some shall report, not all so as to save traffic.

In further other words, embodiments describe a protocol, and an entity or software module for multicast participants which are able to provide (statistical) feedback on the communication/channel quality back to the gNB. This may include participants with transceiver capabilities as well as participants having a direct or indirect feedback link by other means (location and distribution) of listening multicast devices similar to the location and distribution of feedback devices; a channel quality information can be statistically obtained from feedback devices. These participants differ from listening only participant, which are only receivers of multicast messages and cannot signal any feedback on the quality of the message. The software module translates the feedback from the different sources to an equivalent group feedback for the corresponding multicast group. The feedback can include the rank-indicator, MCS-level, preferred power allocation and/or Precoding Matrix Indicator (PMI). For UEs connected to the gNB (active or idle mode), certain power control may be in place. Consequently, the signals of each UE may arrive at the gNB with similar power. Moreover, if power control is not in place, a normalization function can be used to adequately adjust the power of each MCS group at the receiver. As an initial procedure, a gNB may start up and may be on air, providing a multicast service. UEs can connect and receive multicast data streams. The membership of UEs for the multicast servers may either be a priori known via information embedded on the device or provided by the SIM card where the membership can be determined via message exchange with gNB. Here and in the following, a gNB can be also another entity, which is able to perform one or more of the described tasks. Different options may exist for the location of the multicast traffic source:
- A special UE connected to the gNB can be the source of the multicast traffic. The data streams may be transmitted via uplink to gNB and the gNB may remap the data streams to the multicast channel. The special UE can also receive multicast traffic while being a source for multicast traffic for other UEs at the same time.
- The source for multicast traffic is either within the mobile edge cloud or gNB. The multicast traffic may be distributed directly via a gNB, where a service accepts the multicast traffic and maps it to the multicast channel. Furthermore, an additional device can be connected to a physical interface of the gNB to provide a multicast traffic source and the gNB may map all incoming data to a multicast channel.
- The source of multicast traffic may be located within the core network or internet and the local gNB cell may map the multicast traffic from the core network to the multicast channel. That is, a protocol that may possibly be valid for multicast members with transceiver and/or feedback link only, may provide for the initial procedure of a cell startup with multicast members waiting for data stream and membership. Sources of the data stream are defined. An initial MCS level may be determined in the network.

The base station may be configured for selecting a selected value of a set of predefined values of the transmission characteristic when no connectivity information is available. For example, at a time, a cell may be empty, i.e., no UE may be associated with multicast services. The base station may be configured for selecting the selectable value based on a priority information associated with the deduction of the content. That is, the more important the message is, the more resilient the MCS level may be chosen.

In other words, in case of an empty cell, where no information of the channel quality of the multicast UE is available, the gNB may select fixed MCS levels for single or multiple multicast groups such as low, mid, high or the like, based on a given a priori information or starting with lowest defined MCS level according to 3GPP TS 36.213. That is, in an empty cell, no CQI is known. Therefore, a fixed MCS level is selected for single/multiple groups such as BPSK ½ coded or a lowest possible MCS level is selected.

Further in the procedure and, for example, when the cell is not empty but unicasted UEs are connected and record their CQI, the unicast UEs that are connected may have multicast membership and a demand for a common multicast source. On this basis, the gNB may group these UEs to a multicast group having a common multicast source and request for channel quality information, such as the channel quality indicator (CQI). The gNB may select the initial MCS level for initial multicast group (e.g., group 1) based on the lowest reported CQI. In fact, the MCS level may be set such that the lowest report CQI value can be supported. Furthermore, the gNB can create further multicast groups, which have the same multicast source, but differ by MCS level as described for multiple multicast groups for different link quality. For example, mid and high quality multicast group (group 2, 3) may comprise increased MCS levels also based on the CQI reports collected by gNB, where the MCS levels for each multicast group are selected depending on the desired objective. The reporting can take place on granted resources or even grant-free resources. This embodiment relates to the assumption that some unicast members are connected to the cell and report their CQI which provides for an increased degree of information when compared the empty cell. This allows to build multicast MCS level based on lowest CQI in the cell.

When having setup the cell, a maintenance procedure may be implemented, including the case passive, the case probing as described, the case reporting, the case energy detection, the case joint CQI report and possibly others. While the multicast transmission is ongoing, the MCS level of the multicast group may be adapted over time according to provided channel quality feedback from the UEs. The member of multicast members may be so large, that unicast reports about channel quality are not feasible or efficient. Given different MCS levels for different multicast groups, the gNB can adapt the MCS levels based on the named options.

In the case passive, the gNB may accumulate all available feedback information of unicast (or multicast) users, which are generated by the UEs for example by simple SINR measurements. The software module at the gNB may translate the collected information to group feedback information for the corresponding multicast group. It is to be noted that software modules described herein may also be hardware implemented.

In the case probing, the probing package may be transmitted as previously described.

In the case reporting, the gNB can send via SIB a global MCS level for the multicast group. Embodiments propose a new System Information Block (SIB) for communicating to all UEs in the serving cell with the MCS levels for the multicast transmission while there is a mapping between a multicast group (e.g., low, mid, high or other separation/grouping) and the corresponding MCS level. If MCS level changes, the SIB is sent prior to the change with a timing information when the new MCS level applies, e.g., the change applies in a number of subframes, e.g., 5, 10, 20, 30 or a different number or the like. That is, the base station may be configured for reporting the adaption of the transmission characteristic prior to transmitting the subsequent, adapted multicast signal. The base station may be configured for using a system information block of the wireless communication network for reporting the adaptation. The base station may be configured for evaluating a single unicast uplink channel for a reply of at least a subset of apparatuses from the group of apparatuses and to estimate a combinatory reply based on an energy level detected on the unicast uplink channel. This may be performed, for example, in a case energy detection of the maintenance procedure.

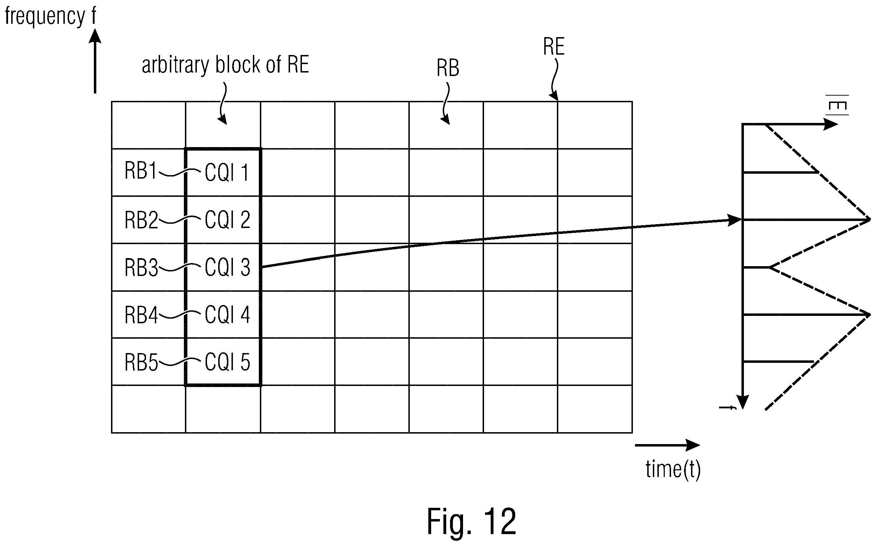

When referring now to Fig. 12, there is shown a resource element RE having a plurality of resource blocks RB arranged in a time/frequency grid. Some specific resource blocks RB₁ to RB₅ may be designated to be used for a reply, in particular, the combinatory reply of a unicast uplink channel. That is, a resource block that is intentionally directed to a single UE is accessed by a plurality of UEs, if applicable. Thereby and as all UEs that access the respective RB transmit a same message or same symbols, an energy E increases for this resource block RB₁ to RB₅ as more UEs report the respective channel information. The special resource blocks RB₁ to RB₅ that are dedicated for the reply may arbitrarily be arranged within the resource element. A number of dedicated resource blocks RB₁ to RB₅ may be any number of at least one.

In other words, if a UE knows after receiving SIB with advised MCS level, that the current self-measured CQI does not support the advised MCS level, it will report to gNB via unicast uplink that it cannot sustain the MCS level in the multicast group, i.e., the current channel conditions do not allow a successful reception with the chosen MCS level (MCS NACK).

Here, embodiments exploit the theory of computational functions over the wireless channel as described in [Gol14]. The reporting of the MCS NACK may be done by each UE on the same physical resources (not necessarily a resource block, but one or many resource elements). Thus, the reported MCS NACK of all UEs may be superimposed and the gNB may detect the NACK on the selected resource elements via energy detection if just a single UE reports MCS NACK, the gNB knows that not all multicast members can decode the MCS level, but without identifying the precise UE. Since the MCS NACKs are superimposed on the same resource elements, the detected energy level correlates with the number of reported NACKs. The higher the detected energy on the resource elements, the more UEs have reported a NACK. Alternatively, also a positive acknowledgement may be reported which is to be interpreted similarly. Furthermore, having a uncorrelated channel of the reporting UEs, the energy can indicate the member of received MCS NACK. Of the spaces, the gNB can now select the MCS level according to its desired objective and advise with sending a new SIB, thus getting a new collective report back. This procedure can be iterated until the energy level of the collective NACK signal is under a defined threshold or disappeared completely (i.e., only noise is detected).In addition, to ensure the equal energy of each NACK at gNB receiver, the required transmission power can be signaled to the UEs or obtained through gNB signaled power measurements. That is, the UEs may be signaled a signaled power to be obtained at the gNB.

The base station may be configured for evaluating a single unicast uplink channel for a reply of at least a subset of apparatuses from the group of apparatuses as described. The base station may be configured to estimate a combinatory reply based on information decoded from a plurality of replies received on non-orthogonal resources for the plurality of replies. That is, the replies from the UEs may be received over non-orthogonal resources.

In other words, instead of reporting a NACK on a single resource element, embodiments propose an option for reporting quantized CQI levels from all multicast UEs jointly. The CQI levels may be mapped to different non-orthogonal resources such as Zadoff-Chu-Sequences or other sequences like Huffman sequences, thus creating an orthogonal alphabet. Depending on the measured CQI at the UE on the advised resource blocks from gNB for multicast transmission, the mapped sequence may be selected for reporting. Each UE may use the same physical resources for sending their respective sequence according to the alphabet defined a priori. That is, non-orthogonal resources may be used in a pseudoorthogonal way according to non-orthogonal multiple access (NOMA). That is, a massive (high number) NACK may be supported via NOMA schemes. Codes may be constructed that utilize a same resource but are of additive nature.

The base station may be configured for determining, from the plurality of received replies, a requested transmission characteristic being requested by the group of apparatuses and to adapt the transmission characteristic based on the requested transmission characteristic. A request may implicitly be contained in the worst or lowest MCI that may be decoded by all of the UEs, wherein a reply mechanism according to Fig. 12 may be used, where, for example, a reply in RB₃ associated with CQI3 may indicate that CQI2 may successfully be decoded. That is, the base station may be configured for evaluating at least a part of a resource element of an uplink frame, the resource element of Fig. 12 for example, for a joint reply of at least a part of the group operators provided with the multicast signal. Such a joint reply may be interpreted as not having necessary knowledge about the channel information or QCI of an individual UE.

In other words, a different option is in a single multicast group being reported by eNB via broadcast with corresponding MCS, e.g., reported in SIB. The multicast member may report if their channel capacity is lower than multicast MCS. The multicast member may report jointly in a single resource, e.g., detected by eNB via energy detection. The multicast member may report their required MCS level jointly, e.g., using a Zadoff-Chu sequence. That is, a NACK may be accompanied by a further information reporting the required MCS. For example, the UE may just measure CQI, may quantize the obtained value and may convert it to a dedicated Zadoff-Chu sequence. The UE may transmit their corresponding Zadoff-Chu sequence. Alternatively or in addition, one energy detection may be performed per MCS, e.g., timely separated or at different resource blocks or resource elements, for example, starting with a lowest or highest MCS. In TDD (time division duplex) other UEs may react on it and so that only the lowest MCS may be reported. The probing may be performed so as to stepwise probe lower quality MCS multicast signals, until energy detection detects no signal, that is, a correlation is implemented between an energy level of energy detection and a number of failed MCS signal decoding of multicast members. That is, when having no more NACK, it may be assumed that all probed UEs are able to successfully decode.

When referring again to Fig. 12, embodiments relate to a CQI distribution. Given the described system with many UEs listening to the multicast data, each UE experiences a different communication channel which usually can be quantized with a Channel Quality Indicator (CQI). Collecting all the CQls within the system, there is a distribution of CQls which can be utilized without knowing the individual CQI of each UE. The distribution of quantized CQls can be mapped to one or more RE within the system as displayed in Fig. 12. Based on the joint reporting by a detection, the distribution function can be estimated, i.e., the statistic distribution can be determined. For example, two possible modes for reporting equal two possible estimation functions are described:
- Each UE reports on a resource lower to its CQI; this mode equals a cumulative distribution function (CDF) of the CQI.
- Each UE reports on a resource corresponding to its CQI; this mode equals a power density function (PDF) of the CQI.
- A power weighting of low CQI and high CQI may be performed to represent real CDF/PDF.

These two examples shall not limit the embodiments to use other distribution functions. In either mode, the software module at the gNB may weigh the detected signal based on the channel information on the selected REs for reporting to convert the estimate to a real representation of the function.

That is, an apparatus, e.g., a UE, in accordance with this embodiment may be configured for listening to communication in a wireless communication network being operated so as to comprise a plurality of cells. The apparatus, for example, a UE 606 of Fig. 6 or Fig. 7, may comprise a data memory having stored thereon a key. The apparatus may comprise a wireless interface configured for receiving a multicast signal for the at least one cell, the multicast signal containing a deduction from a content, e.g., the multicast signal 612₁ or 612₂. The apparatus is configured for evaluating a channel quality level of a channel quality between the apparatus and a transmitter of the multicast signal, e.g., the base station 602, and for deriving a connectivity information indicating the channel quality. The connectivity information may be, for example, a CQI. The apparatus may be configured for transmitting a feedback signal containing the connectivity information using a resource element of the wireless communication network, e.g., a resource block RB₁ to RB₅ illustrated in Fig. 12. The resource element may be one of a set of resource elements associated with reporting connectivity information, i.e., dedicated resource elements or resource blocks. Each resource element of the set of resource elements is associated with a channel quality level. Note that resource element in connection herewith may also be understood as a resource block as a discrimination between resource element and resource block may be obtained in an arbitrary manner, based on a separation of different values of a resource such as time, code, and frequency. The apparatus may be configured for transmitting the feedback signal using a resource element associated with a channel quality lower when compared to the determined channel quality, e.g., using RB₂ when reporting CQI3. Alternatively, the apparatus may be configured for transmitting the feedback signal using a resource element associated with a channel quality level being the determined channel quality level. This would mean, in the present example in which CQI3 is reported to use RB3. The store key may be a pilot symbol or any other means to successfully decode the received signal to be evaluated.

Another apparatus in accordance with present embodiments is configured for listening to communication in a wireless communication network being operated so as to comprise a plurality of cells. The apparatus comprises a data memory having stored thereon a key. The apparatus further comprises a wireless interface configured for receiving a multicast signal for the at least one cell. The multicast signal contains a deduction from a content. The apparatus is configured for synchronizing to the wireless network and to receive the multicast signal whilst remaining unassociated with the wireless network. The apparatus is configured for decoding the deduction using the control unit. That is, the apparatus may be a listening-only device which is unassociated with the base station but which is capable of receiving the multicast signal and to decode it based on the key being stored thereon. This may be useful, for example, when providing emergency messages to a large number of devices. Alternatively or in addition, when a lot UEs are arranged at a same location, for example, in a stadium or the like, it may be useful to provide the content to the UE whilst preventing a data traffic of the UEs in form of an unwanted reply.

The key being mentioned with the apparatus described herein, may be obtained from a user database based on an association with the user database. For example, the user database may be a database of a provider to which the apparatus subscribes. Based thereon, the apparatus may receive the key, e.g., as a part of the SIM or as a payload information of a respective signal.

Further embodiments relate to an apparatus configured for communicating in a wireless communication network being operated so as to comprise a plurality of cells. The apparatus is configured for receiving a report signal indicating a report of a later adaptation of a transmission characteristic of a multicast signal prior to transmitting the multicast signal. For example, the report signal may be part of the SIB. Alternatively or in addition, the report signal may be embedded in the multicast transmission itself. The characteristics may be broadcasted in the cell. The apparatus may be configured for using a unicast uplink for replying to the report signal. That is, the apparatus may provide for a negative and/or positive feedback to report whether to agree or deny the change of the transmission characteristic. Whilst a base station was described which is able to allow its later adaptation, a reply of the apparatus may indicate, to the base station, that the change will not have the intended effect. At least in a combinatory manner, the base station may obtain information, if it is able to reach all members of the group.

Embodiments relate to an apparatus configured for receiving a multicast signal from a base station and in parallel from a second base station and to jointly decode the multicast signal. When referring again to Fig. 8, Fig. 9 and Fig. 10, the apparatus may use both informations so as to decode the multicast signal.

With the presented embodiments, a distribution of unicast members may be used to predict/estimate a distribution of multicast members and to obtain quality distribution of users. A multicast member may receive content or a derivate/deduction even if being unassociated with the base station if it is able to decode, which may be enabled by providing/using appropriate keys. Therefore the receivers of multicast messages may at least pertly be unknown to the base station. The base station may be configured for assuming the distribution of such unknown listeners based on the known listeners so as to optimize communication even for listeners that are unknown. That is, a setup of a group based on unicast members may be extrapolated to be devices that may be described as listen-only devices which are possibly unknown to the base station. But however, when having a high number of unicast members, an estimate may be derived as UEs are distributed and this estimate may also be transferred to unassociated devices.

Embodiments allow to communicate without prior knowledge of the resource map and a channel, e.g., being a listening only device. Embodiments further allow for a communication of multiple devices in a predefined spectrum (band) without access-grant procedure to obtain exclusive (managed) resource allocations. Embodiments provide for the ability to measure a channel quality information without knowledge of a resource map.

Embodiments may be implemented in applications which real time or live requirements. For example, a live streaming of events on site, live gaming such as augmented reality, real world interaction or the like. This includes an enhanced virtual visual layer for massively multiplayer online role-playing games (MMORPGs). Further possible application fields are, for example, enhanced mobile broadband (eMBB) services, device-to-device transmissions, low-latency communication and Public Protection and Disaster Relief (PPDR).

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### References

| | |
|---|---|
| [3GPP36212] | 3GPP TS 36.212, Evolved Universal Terrestrial Radio Access (E-UTRA); Multiplexing and Channel Coding (DCI) |
| [3GPP36213] | 3GPP TS 36.213, Evolved Universal Terrestrial Radio Access (E-UTRA); Physical layer procedures; Release 15.2.0 |
| [3GPP36300] | 3GPPP TS 36.300, Evolved Universal Terrestrial Radio Access (E-UTRA) and Evolved Universal Terrestrial Radio Access Network (E-UTRAN); Overall description; Stage 2, Release 15.3.0 |
| [3GPP36331] | 3GPP TS 36.331, Evolved Universal Terrestrial Radio Access (E-UTRA); Radio Resource Control (RRC); Protocol specification |
| [STN01] | http://www.sharetechnote.com/html/Handbook_LTE_MBSFN.html, Accessed on 2018-11-27 |
| [Gol14] | M. Goldenbaum, "Computation of real-valued functions over the channel in wireless sensor networks," Ph.D. dissertation, Technische Universität München, 2014. |

## Claims

1. An apparatus configured for listening to communication in a wireless communication network being operated so as to comprise a plurality of cells, the apparatus comprising:
a wireless interface configured for receiving a multicast signal for the at least one cell, the multicast signal containing a deduction from a content (604); wherein different deductions provide for the content (604) in at least one of different latencies, different quality levels and different degrees of an incremental coding;
wherein the apparatus is configured for evaluating a channel quality level of a channel quality between the apparatus and a transmitter of the multicast signal and for deriving a connectivity information indicating the channel quality;
wherein the apparatus is configured for transmitting a feedback signal containing the connectivity information using a resource element of the wireless communication network, the resource element being one of a set of resource elements associated with reporting connectivity information; wherein each resource element of the set of resource elements is associated with a channel quality level;
wherein the apparatus is configured for transmitting the feedback signal using a resource element associated with a channel quality level lower when compared to the determined channel quality level; or
wherein the apparatus is configured for transmitting the feedback signal using a resource element associated with the channel quality level being the determined channel quality level.

2. The apparatus of claim 1, wherein derivatives of the content (604) transmitted with different multicast signals (612₁, 612₂) are obtained from the same content (604).

3. A method for operating an apparatus (606) configured for listening to communication in a wireless communication network being operated so as to comprise a plurality of cells, the method comprising:
receiving a multicast signal (612) for the at least one cell with a wireless interface, the multicast signal containing a deduction from a content (604); wherein different deductions provide for the content (604) in at least one of different latencies, different quality levels and different degrees of an incremental coding;
evaluating a channel quality level of a channel quality between the apparatus and a transmitter of the multicast signal and for deriving a connectivity information indicating the channel quality;
transmitting a feedback signal containing the connectivity information using a resource element of the wireless communication network, the resource element being one of a set of resource elements (RB₁-RB₅) associated with reporting connectivity information; wherein each resource element of the set of resource elements is associated with a channel quality level;
transmitting the feedback signal using a resource element associated with a channel quality level lower when compared to the determined channel quality level; or
transmitting the feedback signal using a resource element associated with the channel quality level being the determined channel quality level.

4. A computer readable digital storage medium having stored thereon a computer program having a program code for performing, when running on a computer, a method according to claim 3.

## Patentansprüche

1. Eine Vorrichtung, die zum Abhören von Kommunikation in einem drahtlosen Kommunikationsnetzwerk konfiguriert ist, das dahingehend betrieben wird, eine Mehrzahl von Zellen aufzuweisen, wobei die Vorrichtung folgendes Merkmal aufweist:
eine drahtlose Schnittstelle, die zum Empfangen eines Multicast-Signals für die zumindest eine Zelle konfiguriert ist, wobei das Multicast-Signal eine Ableitung von einem Inhalt (604) enthält; wobei unterschiedliche Ableitungen den Inhalt (604) in zumindest einem aus unterschiedlichen Latenzzeiten, unterschiedlichen Qualitätsniveaus und unterschiedlichen Graden einer inkrementellen Codierung vorsehen;
wobei die Vorrichtung zum Auswerten eines Kanalqualitätsniveaus einer Kanalqualität zwischen der Vorrichtung und einem Sender des Multicast-Signals und zum Ableiten einer Konnektivitätsinformation, die die Kanalqualität angibt, konfiguriert ist;
wobei die Vorrichtung zum Senden eines Rückkopplungssignals, das die Konnektivitätsinformation enthält, unter Verwendung eines Ressourcenelements des drahtlosen Kommunikationsnetzwerks konfiguriert ist, wobei das Ressourcenelement eines aus einem Satz von Ressourcenelementen ist, die einem Berichten von Konnektivitätsinformation zugeordnet sind; wobei jedes Ressourcenelement des Satzes von Ressourcenelementen einem Kanalqualitätsniveau zugeordnet ist;
wobei die Vorrichtung zum Senden des Rückkopplungssignals unter Verwendung eines Ressourcenelements konfiguriert ist, das einem Kanalqualitätsniveau zugeordnet ist, das im Vergleich zu dem bestimmten Kanalqualitätsniveau niedriger ist; oder
wobei die Vorrichtung zum Senden des Rückkopplungssignals unter Verwendung eines Ressourcenelements konfiguriert ist, das dem Kanalqualitätsniveau zugeordnet ist, das das bestimmte Kanalqualitätsniveau ist.

2. Die Vorrichtung gemäß Anspruch 1, wobei Ableitungen des Inhalts (604), der mit unterschiedlichen Multicast-Signalen (612₁, 612₂) gesendet wird, von dem gleichen Inhalt (604) erhalten werden.

3. Ein Verfahren zum Betreiben einer Vorrichtung (606), die zum Abhören von Kommunikation in einem drahtlosen Kommunikationsnetzwerk konfiguriert ist, das dahingehend betrieben wird, eine Mehrzahl von Zellen aufzuweisen, wobei das Verfahren folgende Schritte aufweist:
Empfangen eines Multicast-Signals (612) für die zumindest eine Zelle mit einer drahtlosen Schnittstelle, wobei das Multicast-Signal eine Ableitung von einem Inhalt (604) enthält; wobei unterschiedliche Ableitungen den Inhalt (604) in zumindest einem aus unterschiedlichen Latenzzeiten, unterschiedlichen Qualitätsniveaus und unterschiedlichen Graden einer inkrementellen Codierung vorsehen;
Auswerten eines Kanalqualitätsniveaus einer Kanalqualität zwischen der Vorrichtung und einem Sender des Multicast-Signals und Ableiten einer Konnektivitätsinformation, die die Kanalqualität angibt;
Senden eines Rückkopplungssignals, das die Konnektivitätsinformation enthält, unter Verwendung eines Ressourcenelements des drahtlosen Kommunikationsnetzwerks, wobei das Ressourcenelement eines aus einem Satz von Ressourcenelementen (RB₁-RB₅) ist, die einem Berichten von Konnektivitätsinformation zugeordnet sind; wobei jedes Ressourcenelement des Satzes von Ressourcenelementen einem Kanalqualitätsniveau zugeordnet ist;
Senden des Rückkopplungssignals unter Verwendung eines Ressourcenelements, das einem Kanalqualitätsniveau zugeordnet ist, das im Vergleich zu dem bestimmten Kanalqualitätsniveau niedriger ist; oder
Senden des Rückkopplungssignals unter Verwendung eines Ressourcenelements, das dem Kanalqualitätsniveau zugeordnet ist, das das bestimmte Kanalqualitätsniveau ist.

4. Ein computerlesbares digitales Speichermedium, auf dem ein Computerprogramm gespeichert ist, das einen Programmcode zum Durchführen, wenn es auf einem Computer läuft, eines Verfahrens gemäß Anspruch 3 aufweist.

## Revendications

1. Appareil configuré pour écouter les communications dans un réseau de communication sans fil fonctionnant de manière à comprendre une pluralité de cellules, l'appareil comprenant :
une interface sans fil configurée pour recevoir un signal de multidiffusion pour l'au moins une cellule, le signal de multidiffusion contenant une dérivation d'un contenu (604) ; dans laquelle différentes dérivations fournissent le contenu (604) dans au moins l'une de différentes latences, de différents niveaux de qualité et différents degrés d'un codage incrémental ;
dans lequel l'appareil est configuré pour évaluer un niveau de qualité de canal entre l'appareil et un émetteur du signal de multidiffusion, et pour dériver une information de connectivité indiquant la qualité de canal ;
dans lequel l'appareil est configuré pour transmettre un signal de retour contenant les informations de connectivité en utilisant un élément de ressource du réseau de communication sans fil, l'élément de ressource étant l'un d'un ensemble d'éléments de ressource associés au signalement des informations de connectivité ; dans lequel chaque élément de ressource de l'ensemble d'éléments de ressource est associé à un niveau de qualité de canal ;
dans lequel l'appareil est configuré pour transmettre le signal de retour en utilisant un élément de ressource associé à un niveau de qualité de canal inférieur lorsque comparé au niveau de qualité de canal déterminé ; ou
dans lequel l'appareil est configuré pour transmettre le signal de retour en utilisant un élément de ressource associé au niveau de qualité de canal étant le niveau de qualité de canal déterminé.

2. Appareil selon la revendication 1, dans lequel des dérivations du contenu (604) transmis avec différents signaux de multidiffusion (612₁, 612₂) sont obtenus à partir du même contenu (604).

3. Procédé d'exploitation d'un appareil (606) configuré pour écouter les communications dans un réseau de communication sans fil fonctionnant de manière à comprendre une pluralité de cellules, le procédé comprenant :
la réception d'un signal de multidiffusion (612) pour l'au moins une cellule dotée d'une interface sans fil, le signal de multidiffusion contenant une dérivation d'un contenu (604) ; dans lequel différentes dérivations fournissent le contenu (604), dans au moins l'une des différentes latences, des différents niveaux de qualité et des différents degrés d'un codage incrémental ;
l'évaluation d'un niveau de qualité de canal d'une qualité de canal entre l'appareil et un émetteur du signal de multidiffusion, et la dérivation d'une information de connectivité indiquant la qualité de canal ;
la transmission d'un signal de retour contenant les informations de connectivité en utilisant un élément de ressource du réseau de communication sans fil, l'élément de ressource étant l'un d'un ensemble d'éléments de ressource (RB₁-RB₅) associés au signalement des informations de connectivité ; dans lequel chaque élément de ressource de l'ensemble d'éléments de ressource est associé à un niveau de qualité de canal ;
la transmission du signal de retour en utilisant un élément de ressource associé à un niveau de qualité de canal inférieur lorsque comparé au niveau de qualité de canal déterminé ; ou
la transmission du signal de retour en utilisant un élément de ressource associé au niveau de qualité de canal étant le niveau de qualité de canal déterminé.

4. Support de stockage numérique lisible par ordinateur sur lequel est stocké un programme informatique présentant un code de programme permettant d'exécuter, lorsqu'il est exécuté sur un ordinateur, un procédé selon la revendication 3.
